# EUROPÄISCHE PATENTSCHRIFT

(11) **EP 0 523 367 B1**
(45) Veröffentlichungstag und Bekanntmachung des Hinweises auf die Patenterteilung: **10.04.1996**
(21) Anmeldenummer: 92109612.9
(22) Anmeldetag: 06.06.1992
(51) Int. Cl.: B41F 21/10, B41F 13/08, F16C 13/00

(54) **Zylinder für die Papierführung an Bogenrotationsdruckmaschinen**
Cylinder for guiding paper in sheet-fed rotary printing machines
Cylindre de guidage du papier dans des machines rotatives à imprimer des feuilles

(30) Priorität: 15.06.1991 DE 4119824
(43) Veröffentlichungstag der Anmeldung: 20.01.1993
(73) Patentinhaber: KOENIG & BAUER-ALBERT Aktiengesellschaft, D-97080 Würzburg (DE)
(72) Erfinder: Wieland, Erich Georg, W-8700 Würzburg (DE)

(56) Entgegenhaltungen:
- DE-A- 3 823 846
- US-A- 2 048 005

## Beschreibung

Die Erfindung betrifft einen Zylinder für die Papierführung an Bogenrotationsdruckmaschinen gemäß dem Oberbegriff des Patentanspruches 1.

Es ist bekannt, daß bei papierführenden Zylindern von Bogenrotationsdruckmaschinen Passerfehler auftreten können. Ursache dieser Passerfehler sind einesteils Deformationen des Papiers durch Druck und Feuchtung. Anderenteils werden aber Deformationen der Bogenvorderkante durch Verbiegungen der papierführenden Zylinder, im Bereich von 5 bis 10 µm verursacht. Das Maß der Durchbiegung eines Zylinders tritt verdoppelt als Passerfehler in Erscheinung. Die Vielzahl der Übergabestellen an Mehrfarbenmaschinen, ca. 6 bis 12, können konkave Deformationen der Bogenvorderkantenlinie im Bereich von 0,1 µm verursachen. Dazu muß noch folgendes bemerkt werden.

Wird ein zu transportierender Bogen, je nach Konfiguration der Druckwerke, z. B. in der Horizontalen auf der einen Seite durch die Greiferübernahmen und nach ca. einer halben Umdrehung an die Greifer des nächstfolgenden Zylinders übergeben, und ist der Zylinder beispielsweise durch die Schwerkraft um 5 µm bei der Bogenübernahme nach unten gebogen, so zeigt nach einer halben Umdrehung die Greifereinrichtung in die entgegengesetzte Richtung. Durchbiegungen werden nicht nur durch Schwerkräfte, sondern auch durch Antriebskomponenten am Räderzug und durch Kräfte in der Druckzone bewirkt.

Gemäß DE-OS 38 23 846 ist ein Zylinder im Druckwerk von Bogen-Rotationsdruckmaschinen bekannt, bei welchem der Verbiegung des Zylinders dadurch entgegengewirkt wird, daß die Zylinder als Hohlkörper ausgebildet sind und daß im Hohlkörper eine Achse an mindestens drei Stellen gelagert ist und daß die Achse am mittleren Lager exzentrisch ausgebildet ist, um Achse und Zylinder zu verspannen.

Nachteilig bei diesem Zylinder ist, daß drei zusätzliche Lagerstellen notwendig sind, daß der Hohlkörper mit drei präzis fluchtenden Bohrungen zur Aufnahme der drei Lager versehen sein muß.

Der Erfindung liegt die Aufgabe zugrunde, einen Zylinder für die Papierführung an Bogenrotationsdruckmaschinen mit Greifeinrichtungen zum Überführen der zu bedruckenden Bogen zu schaffen, der auf einfache Art so ausgestattet ist, daß der Durchbiegung des Zylinder entgegenwirkt wird.

Erfindungsgemäß wird die Aufgabe durch den kennzeichnenden Teil des Anspruchs 1 gelöst. Zweckmäßige Ausgestaltungen der Erfindung sind den Unteransprüchen zu entnehmen.

Die Durchbiegungen von bogenführenden Zylindern in den verschiedenen Größenordnungen, die durch Eigengewicht, durch Druckspannung und durch die Antriebskräfte entstehen können, sind durch den erfindungsgemäßen Aufbau des Zylinders weitestgehend vermieden. Sollten dennoch geringfügige Durchbiegungserscheinungen auftreten, so können diese mit der Justiereinrichtung über den zentrisch im rohrförmigen Lagerzapfen angeordneten Achszapfen ausgeglichen werden. Somit kann auch eine mögliche Korrektur der Bogenvorderkanten in konkaver oder konvexer Richtung vorgenommen werden, nachträglich oder bei laufender Maschine.

Durch die Anordnung von zwei rohrförmigen Lagerzapfen ist es auch möglich, die beiden darin zentrisch gelagerten Achszapfen durch beidseitig vorhandene Justiereinrichtungen zu verspannen, was bei langen schlanken Walzen von Vorteil sein kann.

Die Erfindung soll nachstehend an mehreren Ausführungsbeispielen näher erläutert werden. Die zugehörigen Zeichnungen zeigen:
- Fig. 1: einen Längsschnitt durch einen erfindungsgemäßen Zylinder mit Lagerzapfen, Lagern und Verstelleinrichtung;
- Fig. 2: die Ansicht A nach Fig. 1;
- Fig. 3: einen Längsschnitt durch eine zweite Ausführungsvariante eines erfindungsgemäßen Zylinders, jedoch ohne Lager und Verstelleinrichtung;
- Fig. 4: einen Längsschnitt durch eine dritte Ausführungsvariante eines erfindungsgemäßen Zylinders.

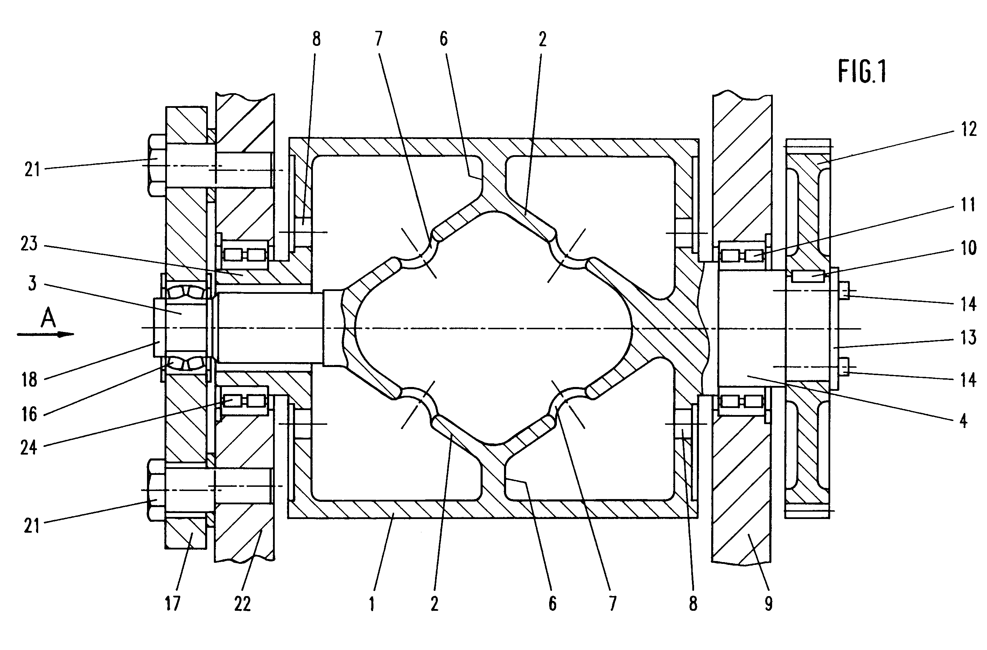

Der Zylinder besteht gemäß Fig. 1 aus einem einteiligen Gußkörper mit Außenkörper 1, welcher im Inneren Stege 2 aufweist, die jeweils von den zentrisch zur Mantelfläche des Zylinders angeordneten Achszapfen 3; 4 in axialer Richtung zur Mitte des Zylinders verlaufen und die Form von zwei hohlen Doppelkegeln besitzen, welche in der Zylindermitte mit ihren ringförmigen Flächen 6 zusammengeführt sind. Die Stege 2 weisen Ausnehmungen 7 und Kernöffnungen 8 auf, um den Formkern des Zylinders zu fixieren bzw. um den Formsand entfernen zu können. Die Greifereinrichtungen zum Überführen der zu bedruckenden Bogen sind nicht dargestellt. Der Achszapfen 4 ist als Antriebszapfen ausgebildet und sitzt in einem im Gestell 9 angeordneten Lager 11. Außerhalb des Gestells 9 ist ein Zahnrad 12 über eine Paßfeder 10 drehfest mit dem Achszapfen 4 verbunden. Zentrisch auf dem Achszapfen 4 ist eine Abdeckscheibe 13 mittels Schrauben 14 befestigt.

Der andere Achszapfen 3 ist als Verstellzapfen ausgeführt, welcher in einem Lager 16 gehalten ist, das in einem Flansch 17 befestigt und mit einer Abdeckscheibe 18 abgedeckt ist. Der Flansch 17 besitzt Langlöcher 19, durch welche Verstellnocken 21 geführt sind, die mit dem Gestell 22 lösbar verbunden sind. Der Achszapfen 3 ist in einem rohrförmigen Lagerzapfen 23 zentrisch angeordnet. Der Lagerzapfen 23 ist in einem Lager 24 geführt, welches vom Gestell 22 aufgenommen wird. Die Greifereinrichtungen sind nicht dargestellt, da diese für die vorliegende Erfindung keine Bedeutung haben.

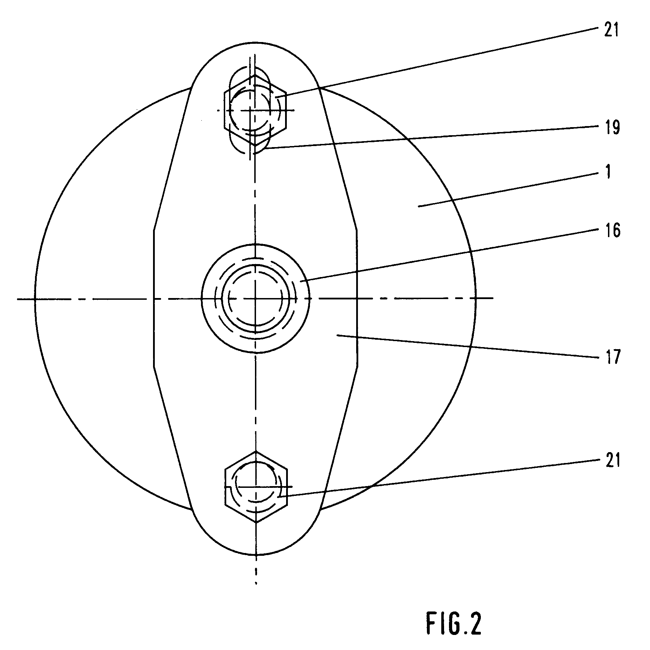

Gemäß Fig. 2 ist die Ansicht A nach Fig. 1 dargestellt. Hieraus ist ersichtlich, daß das den Achszapfen 3 aufnehmende Lager 16 mittels der Verstellnocken 21 über den Flansch 17 radial verspannbar ist.

Statt des Flansches 17 und der Verstellnocken 21 können auch andere bekannte Justiereinrichtungen eingesetzt werden.

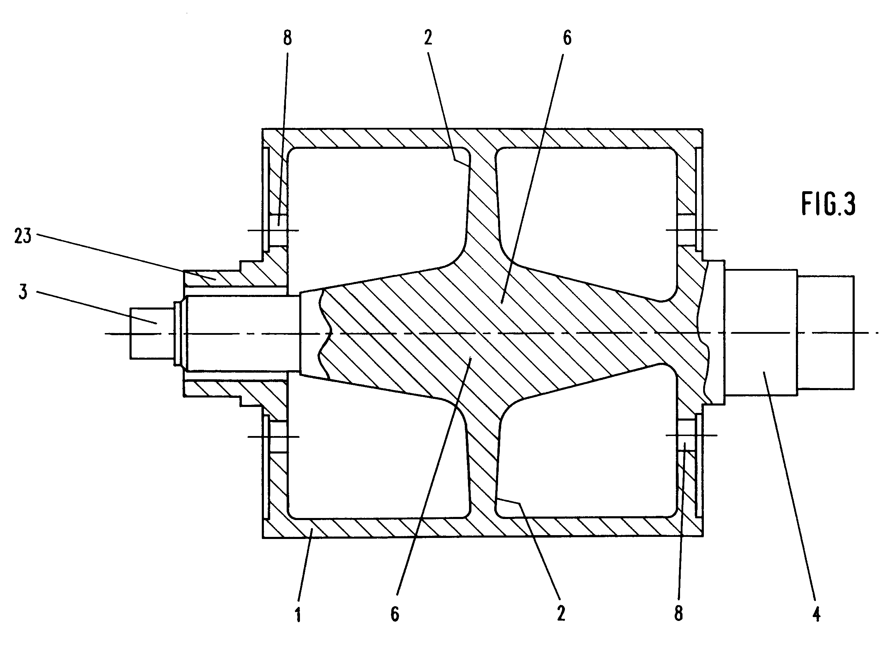

Nach Fig. 3 ist ein Längsschnitt durch eine weitere Ausführungsvariante eines erfindungsgemäßen Zylinders mit einem rotationssymmetrischen Körper dargestellt, wobei der Einfachheit halber die Lager sowie die Verstelleinrichtung weggelassen wurden, da diese, wie in Fig. 1 und 2 dargestellt, ausgeführt sind. Der Zylinder besitzt einen einteiligen rotationssymmetrischen Körper, der von beiden Achszapfen 3; 4 her gesehen, in koaxialer Richtung zur Mitte des Zylinders jeweils in Form von zwei Kegelstümpfen verläuft, die mit ihren kreisförmigen Flächen 6 zusammengeführt und über Stege 2 mit der Mantelfläche 1 des Zylinders fest verbunden sind. Die beiden Stirnseiten des Zylinders weisen eine Anzahl von Kernöffnungen 8 auf, um das Gießen des Zylinders zu ermöglichen bzw. um den Formsand entfernen zu können.

Diese Ausführungsvariante des Zylinders ist besonders vorteilhaft dort einzusetzen, wo auf eine einfache Gestaltung des Gußkerns Wert gelegt wird und bei kleinen Zylindern, bei denen die Materialanhäufung des Achskörpers ohne Bedeutung ist. Es ist auch möglich, daß der Zylinder aus Einzelteilen zusammengeschweißt wird. Dieses Einzelteile bestehen aus dem rotationssymmetrischen Körper, einer Lochscheibe als Steg 2 sowie zwei weiteren Lochscheiben, die stirnseitig angeordnet und mit dem Inneren der Mantelfläche 1 verschweißt sind. Zumindest an einer Stirnseite ist ein rohrförmiger Lagerzapfen 23, axial nach außen gerichtet, angeschweißt.

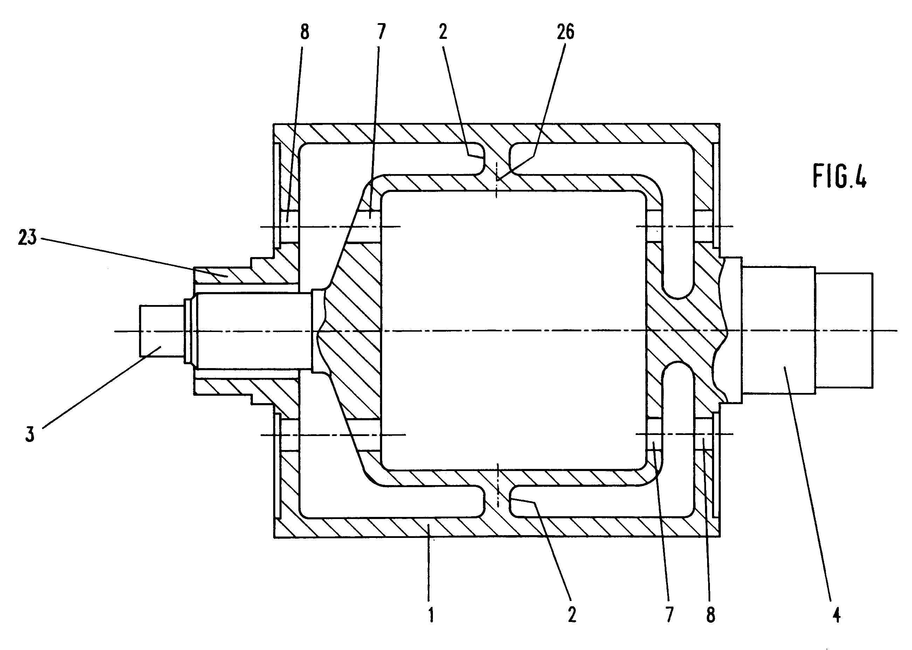

Gemäß Fig. 4 ist ein Längsschnitt durch eine dritte Ausführungsvariante eines erfindungsgemäßen Zylinders mit einem rotationssymmetrischen Innenkörper dargestellt, wobei wiederum die Lager sowie die Verstelleinrichtung nicht gezeigt sind. Der Innenkörper besteht wiederum aus einem einteiligen rotationssymmetrischen Gußkörper, der von beiden Achszapfen 3, 4 her gesehen, in koaxialer Richtung zur Mitte des Zylinders jeweils in Form von zwei Töpfen verläuft, die mit den Rändern 26 zusammengeführt und über Stege 2 mit der Mantelfläche 1 des Zylinders fest verbunden sind. Die beiden Stirnseiten des Zylinders weisen wiederum eine Anzahl von Kernöffnungen 8 auf, um das Gießen des Zylinders zu ermöglichen bzw. um den Formsand entfernen zu können.

Diese Ausführungsvariante des Zylinders ist besonders vorteilhaft bei schlanken Zylindern einzusetzen.

Weiterhin ist es möglich, bei der Verwendung von besonders langen oder schlanken Zylindern , auch den Achszapfen 4 auf der Antriebsseite ebenfalls in einem rohrförmigen Lagerzapfen 23 zentrisch anzuordnen und über eine Justiereinrichtung zu verspannen.

### Teileliste

- 1: Außenkörper, Zylindermantel
- 2: Steg
- 3: Achszapfen
- 4: Achszapfen
- 5: -
- 6: Fläche
- 7: Ausnehmung
- 8: Kernöffnung
- 9: Gestell
- 10: Paßfeder
- 11: Lager
- 12: Zahnrad
- 13: Abdeckscheibe
- 14: Schraube
- 15: -
- 16: Lager
- 17: Flansch
- 18: Abdeckscheibe
- 19: Langloch
- 20: -
- 21: Verstellnocken
- 22: Gestell
- 23: Lagerzapfen, rohrförmig
- 24: Lager
- 25: -
- 26: Rand

## Patentansprüche

1. Zylinder für die Papierführung an Bogenrotationsdruckmaschinen der aus einem mit Achszapfen (3; 4) versehenen Außenkörper besteht, der aus einer Mantelfläche (1) mit Ausnehmungen für die Greifereinrichtung oder aus Traversen mit anschließenden Stegen oder Stirnseiten gebildet wird, so daß ein Hohlkörper besteht, wobei in einem Inneren des Hohlkörpers ein rotationssymmetrischer, mittels einer Verstelleinrichtung exzentrisch verstellbarer Körper als Achse vorgesehen ist, der sowohl an einer ersten Seite mit einem Achszapfen (4) als auch mittig über Stege mit dem Außenkörper verbunden ist sowie an einer zweiten Seite durch einen rohrförmigen Lagerzapfen (23) nach außen ragt und dort mit einem zentrisch angeordneten Lager (16) versehen ist, dadurch gekennzeichnet, daß der rotationssymmetrische Körper sowohl an seiner dem rohrförmigen Lagerzapfen (23) gegenüberliegenden Seite mittig über Stege (2) oder eine kreis- oder ringförmige Fläche (6) als auch in seiner Mitte mit dem Außenkörper fest verbunden ist und daß die durch den rohrförmigen Lagerzapfen (23) ragende Seite des rotationssymmetrischen Körpers mittels des Lagers (16) exzentrisch einstellbar angeordnet ist.

2. Zylinder nach Anspruch 1, dadurch gekennzeichnet, daß der rotationssymmetrische Körper die Form von zwei Hohlkegeln besitzt, die an ihren ringförmigen Grundflächen (6) radial mit der Mantelfläche (1) des Zylinders fest verbunden sind.

3. Zylinder nach Anspruch 1, dadurch gekennzeichnet, daß der rotationssymmetrische Körper die Form von zwei Kegeln besitzt, die mit ihren kreisförmigen Grundflächen (6) über Stege (2) radial mit der Mantelfläche (1) des Zylinders fest verbunden sind.

4. Zylinder nach Anspruch 1, dadurch gekennzeichnet, daß der rotationssymmetrische Körper die Form von zwei Töpfen besitzt, die mit ihren Rändern (26) über Stege (2) radial mit der Mantelfläche (1) des Zylinders fest verbunden sind.

5. Zylinder nach Anspruch 1 bis 4, dadurch gekennzeichnet, daß die Verstelleinrichtung aus einem Flansch (17) besteht, welcher mittig ein Lager (16) zur Aufnahme des Achszapfens (3) besitzt und Langlöcher (19) aufweist, daß der Flansch (17) mittels Verstellnocken (21) am Gestell justierbar angeordnet ist.

6. Zylinder nach Anspruch 1 bis 5, dadurch gekennzeichnet, daß beide Achszapfen (3; 4) jeweils koaxial in den rohrförmigen Lagerzapfen (23) angeordnet sind, die über Verstelleinrichtungen justierbar sind.

7. Zylinder nach Anspruch 1 bis 4, dadurch gekennzeichnet, daß im Zylinder Kernöffnungen (8) und im rotationssymmetrischen Körper Ausnehmungen (7) vorgesehen sind.

8. Zylinder nach Anspruch 1 bis 7, dadurch gekennzeichnet, daß der Hohlkörper mit dem darin angeordneten rotationssymmetrischen Körper einstückig ausgebildet und gegossen ist.

9. Zylinder nach Anspruch 1 und 3, dadurch gekennzeichnet, daß der Hohlkörper oder die Mantelfläche (1) mit dem rotationssymmetrischen Körper über die Stege (2) und Stirnseiten mit zumindest einem rohrförmigen Lagerzapfen (23) zu einem Stück verschweißbar ausgeführt ist.

## Claims

1. Cylinder for guiding paper in sheet-fed rotary printing machines, comprising an outer body which is provided with axle journals (3; 4) and is formed from a lateral surface (1) having openings for the gripper device or from crosspieces having adjoining webs or end faces, so that a hollow body exists, there being provided in an interior of the hollow body a rotationally symmetrical body as an axle, which can be adjusted eccentrically by means of an adjusting device, is connected both at a first side to an axle journal (4) and centrally via webs to the outer body, and at a second side projects outwardly through a tubular bearing journal (23) and is provided there with a centrically arranged bearing (16), characterised in that the rotationally symmetrical body is fixedly connected to the outer body both at its side located opposite the tubular bearing journal (23), centrally via webs (2) or a circular or annular surface (6), and at its centre, and in that the side of the rotationally symmetrical body which projects through the tubular bearing journal (23) is arranged such that it can be adjusted eccentrically by means of the bearing (16).

2. Cylinder according to Claim 1, characterised in that the rotationally symmetrical body has the shape of two hollow cones which are fixedly connected radially to the lateral surface (1) of the cylinder at their annular bases (6).

3. Cylinder according to Claim 1, characterised in that the rotationally symmetrical body has the shape of two cones which are fixedly connected radially to the lateral surface (1) of the cylinder by their circular bases (6) via webs (2).

4. Cylinder according to Claim 1, characterised in that the rotationally symmetrical body has the shape of two pots which are fixedly connected radially to the lateral surface (1) of the cylinder by their rims (26) via webs (2).

5. Cylinder according to Claim 1 to 4, characterised in that the adjusting device comprises a flange (17) which, centrally, has a bearing (16) for receiving the axle journal (3) and contains elongated holes (19), in that the flange (17) is arranged on the frame such that it can be adjusted by means of adjusting cams (21).

6. Cylinder according to Claim 1 to 5, characterised in that both axle journals (3; 4) are in each case arranged coaxially in the tubular bearing journals (23), which can be adjusted via adjusting devices.

7. Cylinder according to Claim 1 to 4, characterised in that core orifices (8) are provided in the cylinder and openings (7) are provided in the rotationally symmetrical body.

8. Cylinder according to Claim 1 to 7, characterised in that the hollow body is constructed and cast in one piece with the rotationally symmetrical body arranged therein.

9. Cylinder according to Claim 1 and 3, characterised in that the hollow body or the lateral surface (1) is designed such that it can be welded to form one piece with the rotationally symmetrical body via the webs (2) and end faces having at least one tubular bearing journal (23).

## Revendications

1. Cylindre de guidage du papier dans des machines rotatives à imprimer des feuilles, comprenant un corps extérieur qui est muni de tourillons d'axe (3 ; 4) et qui est formé d'une surface périphérique (1) pourvue d'évidements pour le système preneur ou de traverses prolongées par des entretoises ou des faces frontales, de façon à créer un corps creux, à l'intérieur du corps creux étant prévu un corps à symétrie de révolution qui fait fonction d'axe et peut être réglé de manière excentrique au moyen d'un dispositif de réglage, qui est relié au corps extérieur aussi bien sur un premier côté par l'intermédiaire d'un tourillon d'axe (4) qu'au centre par l'intermédiaire d'entretoises, qui sort à l'extérieur sur un second côté à travers un tourillon tubulaire d'appui (23) et qui est muni à cet endroit d'un palier (16) monté en position centrale, caractérisé en ce que le corps à symétrie de révolution est solidarisé au corps extérieur aussi bien au centre de son côté faisant face au tourillon tubulaire d'appui (23), en l'occurrence par l'intermédiaire d'entretoises (2) ou d'une surface circulaire ou annulaire (6), qu'en son centre, et en ce que le côté du corps à symétrie de révolution qui traverse le tourillon tubulaire d'appui (23) peut être réglé de manière excentrique au moyen du palier (16).

2. Cylindre selon la revendication 1, caractérisé en ce que le corps à symétrie de révolution présente la forme de deux cônes creux qui sont solidarisés radialement par leurs bases annulaires (6) à la surface périphérique (1) du cylindre.

3. Cylindre selon la revendication 1, caractérisé en ce que le corps à symétrie de révolution présente la forme de deux cônes qui sont solidarisés radialement par leurs bases circulaires (6), au moyen d'entretoises (2), à la surface périphérique (1) du cylindre.

4. Cylindre selon la revendication 1, caractérisé en ce que le corps à symétrie de révolution présente la forme de deux pots qui sont solidarisés radialement par leurs bords (26), au moyen d'entretoises (2), à la surface périphérique (1) du cylindre.

5. Cylindre selon les revendications 1 à 4, caractérisé en ce que le dispositif de réglage est constitué d'une bride (17) qui comporte en son centre un palier (16) pour recevoir le tourillon d'axe (3) et est pourvue de trous oblongs (19), et en ce que la bride (17) est montée sur le bâti avec une possibilité d'ajustement au moyen de cames de réglage (21).

6. Cylindre selon les revendications 1 à 5, caractérisé en ce que les deux tourillons d'axe (3 ; 4) sont disposés chacun coaxialement dans les tourillons tubulaires d'appui (23) qui peuvent être ajustés au moyen de dispositifs de réglage.

7. Cylindre selon les revendications 1 à 4, caractérisé en ce qu'il est prévu, dans le cylindre, des orifices noyautés (8) et, dans le corps à symétrie de révolution, des évidements (7).

8. Cylindre selon la revendication 1 à 7, caractérisé en ce que le corps creux est réalisé et moulé d'une seule pièce avec le corps à symétrie de révolution disposé à l'intérieur.

9. Cylindre selon les revendications 1 et 3, caractérisé en ce que le corps creux ou la surface périphérique (1) sont conçus de manière à pouvoir être soudés d'une seule pièce au corps à symétrie de révolution par l'intermédiaire des entretoises (2) et de faces frontales pourvues d'au moins un tourillon tubulaire d'appui (23).
